# EUROPEAN PATENT SPECIFICATION

(11) **EP 0 632 573 B1**
(45) Date of publication and mention of the grant of the patent: **16.09.1998**
(21) Application number: 93304319.2
(22) Date of filing: 03.06.1993
(51) Int. Cl.: H02P 7/282, H02P 7/12

(54) **DC motor with auxiliary exciting power supply for switching-on series (or compound) start of shunt normal operation according to the load**
Gleichstrommotor mit zusätzlicher Erregungsstromversorgung, der während des Normalbetriebs als Reihenschluss- (oder Kompound-)motor und während des Normalbetriebs in Abhängigkeit von der Last als Nebenschlussmotor arbeitet
Moteur à courant continu à excitation par source auxiliaire fonctionnant en moteur série (ou compound) au démarrage et en moteur shunt en régime normal, en fonction de la charge

(43) Date of publication of application: 04.01.1995
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Blatchford, William Michael

(56) References cited:
- FR-A- 2 353 159
- US-A- 4 171 506
- US-A- 4 639 647

## Description

This invention relates to a DC motor having an auxiliary excitation power supply which is switched on to excite the series field winding of the motor during normal operation, and to provide the motor with the characteristics of high-efficiency and low-loss shunt operation, and series or compound start or overload operation.

Known DC motors of this type are described in FR-A-2 353 159 and US-A-4 171 506.

The present invention provides a DC motor arrangement comprising a main power source having first and second terminals; an auxiliary power supply having first and second terminals; a series field winding having first and second ends; and an armature having first and second ends; the first end of the armature being connected to the first terminal of the main power source, and the second end of the armature being connected to the first end of the series field winding; the first and second terminals of the auxiliary power supply being respectively connected to the first and second ends of the series field winding; and the series field winding being connected to the main power source via a switch having a first switch terminal connected to the first end of the series field winding, a second switch terminal connected to the second end of the series field winding, and a third switch terminal connected to the second terminal of the main power source; the arrangement being characterised in that the first switch terminal is connected to the third switch terminal during normal motor operation, thereby to connect the second terminal of the main power source directly to the armature, that the second switch terminal is connected to the third switch terminal during start-up or an overload condition of the motor, thereby to connect the series field winding in series between the armature and the second terminal of the main power source, and that a choking diode is connected in series between the auxiliary power supply and the series field winding.

The invention will now be described in greater detail, by way of example, with reference to the drawings, in which:-
Fig. 1 is a schematic diagram showing the principal elements of a circuit according to a first preferred embodiment of the invention;
Fig. 2 is a schematic diagram showing a second preferred embodiment of the invention; and
Fig 3 is a schematic diagram showing a third preferred embodiment of the invention.

A conventional series (or compound) motor often has excellent current-to-torque characteristics during start-up and overload operation. However, it is relatively poor in efficiency during normal operation as result of the series field voltage drop. A shunt motor, on the contrary, has excellent efficiency during normal operation, but the current is too high during start-up and overload. The present invention relates to a DC motor with an auxiliary excitation power supply for a series (or compound) motor, and which is switched on to excite the series field winding during normal operation, and to provide the motor with the characteristics of high-efficiency and low-loss shunt operation, and series or compound start or overload operation.

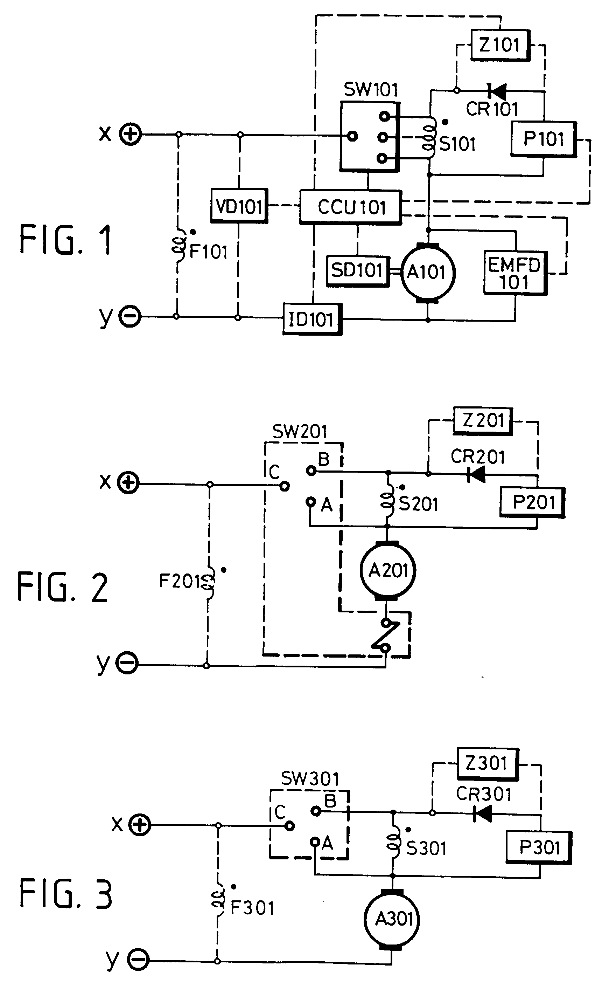

Referring to Figure 1, the preferred motor control circuit includes a series motor made up of a series field winding S101 serially connected with an armature A101, or a compound motor having both a series field winding S101 and a shunt field winding F101. An auxiliary excitation power supply P101, which may be a commutated power supply from a battery, a generator or an AC power supply, is connected in series with a positively-connected choking diode CR101, and then parallel connected to each end of the series field winding S101 to provide auxiliary excitation voltage having the same polarity as the original driving voltage. If the auxiliary power supply P101 is a storage type power source, then a feedback charge limiter Z101, made up of a resistance or a solid state linear switch device, can be parallel connected to each end of the choking diode CR101.

A relay, which may be manually operated, operated by the eccentric force of the motor, or driven by current, or an electro-mechanical or solid state switch device SW101 operated by a controller CCU101, is provided to switch off the auxiliary power supply for series (or compound) starting the motor, and is switched on, upon completion of starting, so that the auxiliary power supply P101 may excite the series field winding S101 and cause the motor to appear as a shunt motor. The switch may also be connected to an intermediate tap position of the series field winding S101 to obtain intermediate characteristics.

The circuit may further include a motor speed detector D101 or an armature current detector ID101 to feed back the motor speed current or the armature EMF in the form of an analogue or digital signal to the controler CCU101 for operating the switch device SW101 to control the motor for series (or compound) starting, and further to cause the motor to behave as a shunt motor by virtue of the auxiliary power supply P101 exciting the series winding during normal operation.

The controller CCU101 can be controlled via a manual input or via an electrical interface to provide a series (or compound) start effect, to switch to an overload state, or to provide shunt normal operation. For example, it may be arranged to accept one of the several illustrated motor operating feedback signals or respective feedback inputs, including motor load current, rotational speed, armature EMF, or auxiliary excitation current.

The above-described system, illustrated in the context of a fixed armature voltage system, can further be applied to a compound voltage driven armature system. In that case, a voltage detector VD101 may be parallel connected to the armature A101 for detecting power voltage, in addition to the speed detector SD101 for detecting motor running speed, the load current detector ID101 for detecting the armature current, or the EMF detector EMFD101 for detecting the EMF, the voltage being transmitted to the controller CCU101, the change in the voltage of the power input being used to correct the switching speed.

Fig.2 shows a second embodiment of the invention, including a series field winding S201 and an armature A201, with one end of the armature being connected to the negative terminal Y of the main power supply, while the connected ends of the series field winding S201 and the armature A201 are connected to a contact A of the contact type switch device SW201, with the contact A being disconnected from the contact C during start up. The other end of the series field winding S201 is connected to the contact B of the switch device SW201 such that the contact B is connected to the contact C during start up.

The common contact C of the switch device SW201 is connected to the positive terminal X of the main power supply. The switch device SW201 can be manually controlled, driven by an eccentric force of the motor, or by a current active type relay in series with the armature A201, or by an armature EMF drive type relay, or by the auxiliary excitation power supply. During starting or overloading, the contact C and the contact B are connected together, and during normal operation the contact C and the contact A are connected together.

The circuit of Fig.2 may further include a shunt field winding F201 parallel connected between the terminals X and Y of the main power supply to cause the motor to appear in a shunt state during normal operation by virtue of switching through the switch device SW201, and to appear as a compound motor during starting and overloading.

An auxiliary power supply P201, which may be a commutated power supply from a battery, or a generator, or an AC power supply, is connected in series with a positively-connected choking diode CR201, and then parallel connected to each end of the series field winding S201 to provide an auxiliary excitation voltage having the same polarity as the voltage from the main suply. If the auxiliary power supply P201 is a storage type power source, then a feedback charge limit regulator Z201, made up of a resistance or a solid state linear switch device, can be parallel connected to each end of the choking diode CR201 in order to regulate the charge against the storage element when the voltage drop across the series field winding is higher than the voltage of the auxiliary power supply.

Fig.3 shows another embodiment of the invention including a series field winding S301 and an armature A301, with one end of the armature being connected to the negative terminal Y of the main power supply, while the connected ends of the series field winding and the armature are connected to the contact A of a switch device SW301 to cause current to be supplied during normal operation leading from the contact A to the armature. The other end of the series field winding S301 is connected to the contact B of the switch device SW301.

The common contact C of the switch device SW301 is connected to the positive terminal X of the main power supply. The switch device SW301 can be manually controlled, driven by an eccentric force of the motor, or by a curent active type relay in series with the armature A301, or by an armature EMF driven relay, or by the auxiliary power supply. During starting or overloading, the contact C and the contact B are mutually connected, and during normal operation the contact C and the contact A are mutually connected.

In addition, a shunt field winding F301 may be connected between the positive and negative terminals of the main power supply, such that, during normal operation, the motor will appear to be in a shunt state as an auxiliary power suply P301 excites the series field winding S301 by virtue of switching through the switch device SW301, and appears as a compound motor during starting and overload.

An auxiliary power supply P301, which may be a commutated power supply from a battery, or a generator, or an AC power supply, is connected in series with a positively-connected choking diode CR301, and then parallel connected to each end of the supply voltage of the series field winding S301 to provide a auxiliary voltage having the same polarity as the main supply voltage. If the auxiliary power supply P301 is a storage type power source, then a feedback charge limit regulator Z301, made up of a resistance or a solid state linear switch device, can be parallel connected to each end of the choking diode CR301.

## Claims

1. A DC motor arrangement comprising a main power source having first and second terminals (y and x); an auxiliary power supply (P101, P201, P301) having first and second terminals; a series field winding (S101, S201, S301) having first and second ends; and an armature (A101, A201, A301) having first and second ends; the first end of the armature being connected to the first terminal of the main power source, and the second end of the armature being connected to the first end of the series field winding; the first and second terminals of the auxiliary power supply being respectively connected to the first and second ends of the series field winding; and the series field winding being connected to the main power source via a switch (SW101, SW201, SW301) having a first switch terminal connected to the first end of the series field winding, a second switch terminal connected to the second end of the series field winding, and a third switch terminal connected to the second terminal (x) of the main power source; the arrangement being characterised in that the first switch terminal is connected to the third switch terminal during normal motor operation, thereby to connect the second terminal of the main power source directly to the armature, that the second switch terminal is connected to the third switch terminal during start-up or an overload condition of the motor, thereby to connect the series field winding in series between the armature and the second terminal of the main power source, and that a choking diode (CR101, CR201, CR301) connected in series between the auxiliary power supply and the series field winding.

2. A DC motor arrangement as claimed in claim 1, wherein the series field winding (S101) further comprises an intermediate tap connect to the switch (SW101).

3. A DC motor arrangement as claimed in claim 1 or claim 2, wherein the switch (SW101, SW201, SW301) is an inertial switch responsive to rotation of the motor.

4. A DC motor arrangement as claimed in any one of claims 1 to 3, wherein the auxiliary power supply (P101, P201, P301) is a storage type power source, a feedback charge limiter (Z101, Z201, Z301) being connected in parallel with the choking diode (CR101, CR201, CR301).

5. A DC motor arrangement as claimed in any one of claims 1 to 4, further comprising a shunt field winding (F101, F201, F301) having first and second ends connected respectively to the first and second terminals (y and x) of the main power source.

## Patentansprüche

1. Gleichstrommotoranordnung versehen mit einer Hauptstromversorgung versehen mit einer ersten und einer zweiten Klemme (X und Y), einer Hilfsstromversorgung (P 101, P 201, P 301) versehen mit ersten und zweiten Klemmen, einer Serienfeldwicklung (S 101, S 201, S 301) mit ersten und zweiten Enden und einem Anker (A 101, A 201, A 301) mit ersten und zweiten Enden, wobei das erste Ende des Ankers mit der ersten Klemme der Hauptstromversorung verbunden ist, und das zweite Ende des Ankers mit dem ersten Ende der Serienfeldwicklung verbunden ist, die erste und die zweite Klemme der Hilfsstromversorgung mit den entsprechenden ersten und den zweiten Enden der Reihenparallelschaltung verbunden sind, und die Serienfeldwicklung verbunden ist mit der Hauptstromversorgung mittels eines Schalters (SW 101, SW 201, SW 301) mit einer ersten Schalterklemme, die mit dem ersten Ende der Serienfeldwicklung verbunden ist, einer zweiten Schalterklemme, die mit dem zweiten Ende der Serienfeldwicklung verbunden ist, und einer dritten Schalterklemme, die mit der zweiten Klemme (x) der Hauptstromversorgung verbunden ist, wobei die Anordnung dadurch gekennzeichnet ist, daß die erste Schalterklemme während des normalen Motorbetriebs mit der dritten Schalterklemme verbunden ist, so daß die zweite Klemme der Hauptstromversorgung direkt mit dem Anker verbunden ist, daß die zweite Schalterklemme während des Anfahr- oder Überlastbetriebs des Motors mit der dritten Schalterklemme verbunden ist, so daß die Serienfeldwicklung in Reihe zwischen dem Anker und der zweiten Klemme der Hauptstromversorgung angeordnet ist, und daß eine Drosseldiode (CR 101, CR 201, CR 301) in Serie zwischen der Hilfsstromversorgung und der Reihenparallelschaltung angeordnet ist.

2. Gleichstrommotoranordnung nach Anspruch 1, wobei die Serienfeldwicklung (S 101) ferner einen dazwischen angeordneten Abgriff aufweist, der mit dem Schalter (SW 101) verbunden ist.

3. Gleichstrommotoranordnung gemäß Anspruch 1 oder 2, wobei der Schalter (SW 101, SW 201, SW 301) einen Trägheitsschalter aufweist, der auf die Rotation des Motors reagiert.

4. Gleichstrommotoranordnung gemäß einem der Ansprüche 1 bis 3, wobei die Hilfsstromversorgung (P 101, P 201, P 301) eine Speicherspannungsversorgung aufweist, wobei ein Rückführungsspannungbegrenzer (Z 101, Z 201, Z 301) parallel verbunden ist mit der Drosseldiode (CR 101, CR 201, CR 301).

5. Gleichstrommotoranordnung gemäß einer der Ansprüche 1 bis 4, die ferner eine Nebenschlußwicklung (F 101, F 201, F 301) mit ersten und zweiten Enden aufweist, die entsprechend mit am ersten und zweiten Enden der Klemmen (y und x) der Hauptstromversorgung verbunden sind.

## Revendications

1. Montage de moteur à courant continu comprenant une source principale d'alimentation ayant une première et une seconde bornes (y et x); une source auxiliaire d'alimentation (P101,P201, P301) ayant une première et une seconde bornes, un enroulement inducteur série ayant une première et une seconde extrémités; et, un induit (A101, A201, A301) ayant une première et une seconde extrémités; la première extrémité de l'induit étant connectée à la première borne de la source principale d'alimentation, et la seconde extrémité de l'induit étant connectée à la première extrémité de l'enroulement inducteur série; la première et la seconde bornes de la source auxiliaire d'alimentation étant respectivement connectées à la première et la seconde extrémités de l'enroulement inducteur série; et l'enroulement inducteur série étant connecté à la source principale d'alimentation à travers un interrupteur (SW101, SW201, SW301) ayant une première borne d'interrupteur connectée a une première extrémité de l'enroulement inducteur série, une seconde borne d'interrupteur connectée à la seconde extrémité de l'enroulement inducteur série, et une troisième borne d'interrupteur connectée à la seconde borne (x) de la source principale d'alimentation; l'agencement étant caractérisé en ce que la première borne de l'interrupteur est connectée à la troisième borne de l'interrupteur pendant le fonctionnement normal du moteur grâce à quoi la seconde borne de la source principale d'alimentation est directement connectée à l'induit, en ce que la seconde bcrne de l'interrupteur est connectée à la troisième borne de l'interrupteur pendant un démarrage ou un état de surcharge du moteur, grâce à quoi l'enroulement inducteur série est connecté entre l'induit et la seconde borne de la source principale d'alimentation et en ce qu'une diode de blocage (CR101, CR201, CR301) est connectée en série entre la source auxiliaire d'alimentation et l'enroulement inducteur série.

2. Montage de moteur à courant continu selon la revendication 1, dans lequel l'enroulement inducteur série (S101) comprend en outre une prise intermédiaire connectée à l'interrupteur (SW101).

3. Montage de moteur à courant continu selon l'une des revendications 1 ou 2 dans lequel l'interrupteur (SW 101, SW201,SW301) est un interrupteur à inertie qui répond à la rotation du moteur.

4. Montage de moteur à courant continu selon l'une quelconque des revendications 1 à 3, dans lequel la source auxiliaire d'alimentation (P101, P201, P301) est une source d'alimentation du type à stockage, un limiteur de charge de rétroaction (Z101, Z201, Z301) étant connecté en parallèle avec la diode de blocage (CR101, CR201, CR301).

5. Montage de moteur à courant continu selon l'une quelconque des revendications 1 à 4, comprenant en outre un enroulement inducteur shunt (F201, F201, F301) ayant une première et une seconde extrémités respectivement connectées aux première et seconde bornes (y et x) de la source principale d'alimentation.
